# EUROPÄISCHE PATENTSCHRIFT

(11) **EP 1 227 632 B1**
(45) Veröffentlichungstag und Bekanntmachung des Hinweises auf die Patenterteilung: **09.08.2006**
(21) Anmeldenummer: 01000790.4
(22) Anmeldetag: 21.12.2001
(51) Int. Cl.: H04L 29/06, H04L 12/56, H04M 7/00

(54) **Verfahren zum Betrieb eines Multimedia-Kommunikationsnetzwerkes**
Method of operating a multimedia communications network
Procédé pour faire fonctionner un réseau de communications multimedia

(30) Priorität: 26.01.2001 DE 10103527
(43) Veröffentlichungstag der Anmeldung: 31.07.2002
(73) Patentinhaber: SIEMENS AKTIENGESELLSCHAFT, 80333 München (DE)
(72) Erfinder: Müller, Harald, 82205, Gilching (DE); Totzke, Jürgen, 85586, Poing (DE)

(56) Entgegenhaltungen:
- ROY R R: "Application layer QoS signalling architecture and protocol: H.323 application specific and generic value added services" ITU TELECOMMUNICATION STANDARDIZATION SECTOR. WP2/SG16 DELAYED CONTRIBUTION APC-1979, [Online] 9. - 10. November 2000, Seiten 1-16, XP002242353 Gefunden im Internet: <URL:ftp://standard.pictel.com/avc-site/ti ll_0012/0011_Gen/> [gefunden am 2003-05-19]
- BUCKLEY M, STUDYGROUP 16: "Annex N of H.323 - End to End QoS Control and Signalling in H.323 systems" ITU TELECOMMUNICATION STANDARDIZATION SECTOR. TEMPORARY DOCUMENT 126 REV1, XX, XX, 7. Februar 2000 (2000-02-07), Seiten 1-56, XP002169185
- SCHULZRINNE H ET AL: "RFC 1889: RTP: A Transport Protocol for Real-Time Applications" NETWORK WORKING GROUP REQUEST FOR COMMENTS, XX, XX, Januar 1996 (1996-01), Seiten 1-38, XP002229836
- CLARK R J ET AL: "Providing scalable Web services using multicast communication" COMPUTER NETWORKS AND ISDN SYSTEMS, NORTH HOLLAND PUBLISHING. AMSTERDAM, NL, Bd. 29, Nr. 7, 1. August 1997 (1997-08-01), Seiten 841-858, XP004096541 ISSN: 0169-7552

## Beschreibung

Die Erfindung befaßt sich mit einem Verfahren zum Betrieb eines Multimedia-Kommunikationsnetzwerkes mit mindestens zwei Endpunkten und mindestens einer Registrierungseinheit. Weiter befaßt sich die Erfindung mit einem Verfahren zum Betrieb eines Multimedia-Kommunikationsnetzwerkes mit mindestens zwei Endpunkten zwischen denen durch einen Ruf Media- und/oder Datenverbindungen hergestellt werden.

Registrierungseinheiten sind Netzwerkelemente oder -funktionen, bei denen sich die Nutzer der Endpunkte authentifizieren und registrieren und die den anstehenden Ruf autorisieren. In einer H.323-basierten MultimediaNetzwerkstruktur ist der sog. Gatekeeper eine solche Registrierungseinheit; bei SIP-basierten Multimedia-Netzwerken ist dies der sog. SIP-Server mit seinen Serverfunktionen wie beispielsweise Registrar oder Redirekt-Server.

Multimedia-Kommunikationsnetzwerke sind Netzwerke, beispielsweise für Videokonferenzen, bei denen die Informationen (Servicekomponenten Video und/oder Audio und Daten) mittels standardisierter Signalisierungsverfahren, wie z.B. gemäß dem ITU-T-Standard H.323 oder dem von der IETF definierten Session Initiation Protocol (SIP), beispielsweise über das Internet übermittelt werden. Die Verwendung des H.323-Standards ermöglicht es im Rahmen eines Rufes gleichzeitig Media-Verbindungen (Audio und Video) und Datenverbindungen aufzubauen, so daß die Teilnehmer bei der Videokonferenz gleichzeitig ein gemeinsames Dokument bearbeiten, miteinander sprechen und sich gegenseitig sehen können. Dabei ist es jedoch auch möglich, lediglich eine oder zwei der genannten Verbindungsarten (Video, Audio, Daten) in einem Ruf auf- und abzubauen.

Die unidirektionalen Media-Verbindungen und die bidirektionalen Datenverbindungen sind jeweils durch ihre Transportadresse identifiziert. Im IP-basierten Internet ist dies die IP-Adresse und die sog. UDP/TCP-Portnummer.

Je nach Typ der Verbindung (Media oder Daten) ändern sich die Anforderungen an die Bandbreite der Verbindung im Netz, die für die Servicekomponente reserviert werden muß. Zudem bestehen je nach Servicetyp unterschiedliche Anforderungen an die Dienstgüte (Quality-of-Service: QoS), ausgedrückt in Jitter, Ende-zu-Ende Verzögerungen und Paketverlust (auch durch Bitfehler) im Netz.

Um die Dienstgüte einer Verbindung zu überwachen und sicherzustellen, ist es bekannt, dem Netzwerk QoS-Einrichtungen hinzuzufügen. QoS-Einrichtungen sind Netzwerkelemente oder -funktionen, die die Dienstgüte überwachen und sicherstellen. Damit die QoS-Einrichtungen jedoch die Verbindungen überwachen und Ressourcen verwalten können, ist es notwendig, die jeweiligen Transportadressen der Verbindungen zu ermitteln.

Die Ermittlung der Transportadressen ist beim H.323-Signalisierungsprotokoll ein mehrstufiger iterativer Prozeß, bei dem verschiedene Signalinierungskanäle im Rahmen des Ruf- und Verbindungsaufbau des H.323-Protokolls (H.225-RAS, H.225/Q.931, H.245) erfolgreich geprüft werden müssen. Erschwert wird die Ermittlung der Transportadresse zusätzlich dadurch, daß das H.323-Protokoll mehrere Optionen für die H.245-Signalisierung vorsieht (bspw. Normal Call Setup, Early H.245, Fast Connect, H.245-Tunneling). Die Ermittlung der Transportadresse mittels der bekannten iterativen Verfahren ist zeitkritisch, da hierdurch die Netzwerkelemente belastet werden, implementierungsintensiv, da Möglichkeiten geschaffen werden müssen, um das iterative Verfahren durchzuführen und fehlerträchtig.

Entsprechende Signalisierungsprotokolle zum Nachrichtenaustausch im Rahmen der H.323-Empfehlung sind aus der ITU-T-Empfehlung H.225.0 vom September 1999 bekannt.

Aus der Druckschrift "Application Layer QoS Signalling Architecture and Protocol: H.323 Application Specific and Generic Value Added Services", R.R. Roy, Study Group 16, ITU Standardization Sector, 9.-10. November 2000, XP002242353, ist eine Architektur zur Dienstgütesignalisierung bekannt. Die dort vorgeschlagenen Verfahren zur Sicherung der Dienstgüte erfordern jedoch ebenfalls einen verhältnismäßig hohen Signalisierungsaufwand.

Vor diesem Hintergrund liegt der Erfindung das technische Problem zugrunde, ein Verfahren zum Betrieb eines Multimedia-Kommunikationsnetzwerks vorzuschlagen, bei dem die Identifikation der Verbindungen einfacher erfolgt.

Bei einem Multimedia-Kommunikationsnetzwerk mit mindestens zwei Endpunkten und mindestens einer Registrierungseinheit wird dieses Problem gemäß Anspruch 1 gelöst.

Beim H.323-Standard existieren die Rufstatusanforderungsmeldung in Form der H.225-RAS-IRQ-Meldung und die Rufstatusquittungsmeldung in Form der H.225-RAS-IRR Meldung bereits und können standardverträglich angewendet werden.

Die Rufstatusanforderungsmeldung enthält eine Umleitungsanweisung für die Rufstatusquittungsmeldung. Dadurch ist es möglich, die Information über die Verbindung direkt an einen bestimmten Empfänger zu senden, ohne die Information von der eigentlichen empfangsbestimmten Registrierungseinheit weiterleiten zu lassen. So kann die Umleitungsanweisung eine Übermittlung der Rufstatusquittungsmeldung an die QoS-Einrichtung oder aber an einen Ressourcen-Manager des Multimedia-Kommunikationsnetzwerks fordern. Dadurch kann die Information über die Verbindung rascher an den gewünschten Empfänger übermittelt werden. Zudem wird durch diese Maßnahme der Signalisierungsverkehr in dem Netzwerk reduziert.

Unter Verwendung der Möglichkeit der standardisierten Signalisierungsverfahren, Rufauf- bzw. -abbau sowie Verbindungsauf- bzw. -abbau zu trennen, kann die Verbindung direkt zwischen den Endpunkten ohne Eingriff der Registrierungseinheit erstellt werden. Entlang dieses logischen Weges wird der Media- und/oder Datenverbindung die Transportadresse zugewiesen. Durch die erfindungsgemäße Verwendung von Rufstatusanforderungs- und -quittungsmeldungen entsteht die Möglichkeit, die Informationen über die Eigenschaften der Verbindung, die den Endpunkten spätestens zum Zeitpunkt des Aufbaus der Verbindungen bekannt ist, ohne vorgeschaltete aufwendige iterative Ermittlung direkt an den Empfänger zu senden.

Bei dem erfindungsgemäßen Verfahren weisen die Rufstatusanforderungsmeldungen die Endpunkte an, die Eigenschaften der zwischen den Endpunkten hergestellten Media-Verbindungen zu berichten, den Status, die Transportadresse und die zuzuweisende Bandbreite der Verbindung.

Die H.225-RAS-IRQ-Meldungen werden beim H.323-basierten Netzwerk von dem Gatekeeper nach Ankunft des Rufes, also sobald dem Ruf eine Referenz zugewiesen wurde (callReference-Value), versandt.

Bei dem erfindungsgemäßen Verfahren besteht die Möglichkeit, daß die Registrierungseinheit eine Schnittstelle mit einer QoS-Einrichtung oder einem Ressourcen-Manager hat und nach Empfang der Rufstatusquittungsmeldung deren Informationen an die QoS-Einrichtung oder den Ressourcen-Manager weiterleitet.

Ressourcen-Manager sind Einheiten mit Netztopologiewissen, die den aktuellen Netzauslastungsgrad überwachen und bei der Rufannahmekontrolle der Verbindung bezogen auf den Verbindungsweg mitwirken.

Bei einem Multimedia-Kommunikationsnetzwerk mit mindestens zwei Endpunkten, zwischen denen durch einen Ruf Media- und/oder Datenverbindungen hergestellt werden, wird das vorgenannte Problem nach Ankunft eines Rufes jeweils eine Rufstatusanforderungsmeldung an die jeweils am Ruf beteiligten Endpunkte gesandt gemäß dem unabhängigen Anspruch 2 gelöst.

Bei einem derartigen Netzwerk - im H.323-Standard als 'gatekeeperless' bezeichnet - übernimmt ein Endpunkt die Rolle der Registrierungseinheit. Dieser fordert mittels der Rufstatusanforderungsmeldung die weiteren, an dem Ruf beteiligten Endpunkte auf, Rufstatusquittungsmeldungen beispielsweise an eine QoS-Einrichtung zu senden. Der die Rufstatusanforderungsmeldung absendende Endpunkt selbst kann ggf. eine unaufgeforderte Rufstatusquittungsmeldung ebenfalls an die QoS-Einheit absenden.

Bei der Verwendung mehrerer QoS-Einrichtungen, ist es zweckmäßig die QoS-Einrichtungen mit einer IP-Multicast-Adresse zu registrieren. Diese IP-Multicast-Adresse wird dann als Umleitungszieladresse in den Rufstatusquittungsmeldungen verwendet. Auf diese Weise wird sichergestellt, daß die Informationen über die Verbindungen an alle betroffenen QoS-Einheiten weitergeleitet werden.

Um die Media-Verbindung zwischen den Endpunkten fortlaufend zu überwachen, ist es zweckmäßig, daß die Rufstatusanforderungsmeldung eine Aufforderung enthält, die geforderte Rufstatusquittungsmeldung zyklisch zu versenden. Besonders vorteilhaft kann die Rufstatusanforderungsmeldung von den Endpunkten so behandelt werden, daß eine Rufstatusquittungsmeldung aufgefordert übermittelt wird und darauf folgend unaufgeforderte Rufstatusquittungsmeldungen immer dann übermittelt werden, wenn die Eigenschaften einer Verbindung geändert wurden; beispielsweise wenn eine Media-Verbindung auf- oder abgebaut wurde oder in ihrer Bandbreitenanforderung verändert wurde. Auf diese Weise können Informationen über die Media-Verbindungen zeitnah erhalten werden, die zum Zeitpunkt des Abschickens der Rufstatusanforderungsmeldung noch nicht bekannt waren.

Weitere Vorteile und Einzelheiten der Erfindung ergeben sich aus den Unteransprüchen und der Erläuterung des in der Zeichnung dargestellten Ausführungsbeispiels. In der Zeichnung zeigen
- Fig. 1: eine H.232-basierte Multimedianetzwerkstruktur einer kleinen Bürostruktur, mit Netzwerken, die mit dem erfindungsgemäßen Verfahren betrieben werden,
- Fig. 2: eine initiierende H.323-Signalisierungsabfolge mit Meldungen zwischen den zu verbindenden Endpunkten und dem Gatekeeper eines Netzwerkes nach Fig. 1,
- Fig. 3: eine zu Fig. 2 folgende Signalisierungsabfolge zwischen den Endpunkten und einer QoS-Einrichtung,
- Fig. 4: eine zu Fig. 2 folgende Signalisierungsabfolge zwischen den Endpunkten und einem Ressource Manager.

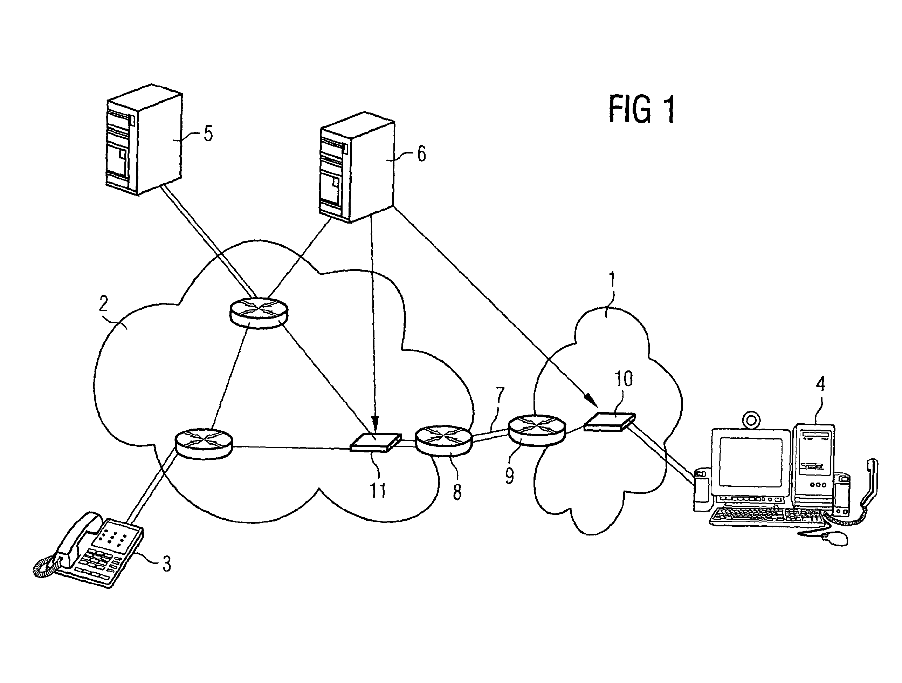

Die in Fig. 1 dargestellte Netzwerkstruktur weist zwei Multimedia-Kommuniktionsnetzwerke 1, 2 auf, die jeweils gemäß dem H.323-Standard betrieben werden. Die Netzwerke 1, 2 weisen Endpunkte 3, 4 sowie eine als Gatekeeper ausgestaltete Registrierungseinheit 5 und einen gemeinsamen Ressourcen-Manager 6 auf. Verbunden werden die Netzwerke 1, 2 über einen Weitverkehrsnetz (WAN) -Link 7. Zu diesem Zweck weist jedes Netzwerk 1, 2 einen Access-Router 8, bzw. 9 auf, der mit dem jeweils anderen Access-Router über den WAN-Link 7 verbunden ist. Jedes Netzwerk 1,2 enthält weiterhin eine QoS-Einrichtung 10, bzw. 11 vor bzw. nach den Access-Routern.

In dieser Netzwerkstruktur erfolgt die H.323-Rufsignalisierung über den Gatekeeper 5, während die H.323-Media-Verbindung direkt zwischen den Endpunkten 3, 4 aufgebaut wird.

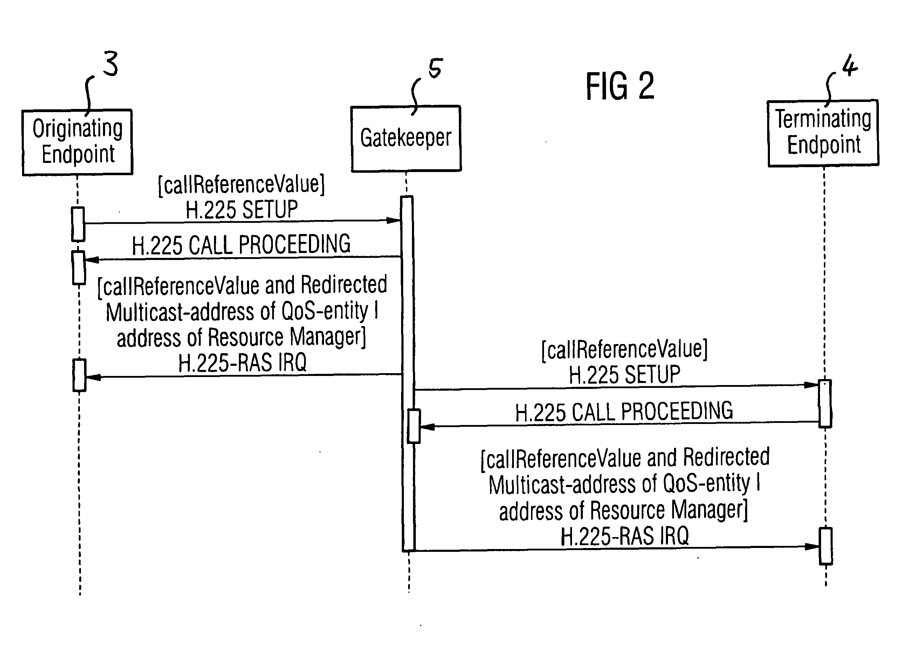

In den Fig. 2 bis 4 sind H.323-Signalisierungsabfolgen dargestellt, die beim Aufbau von Media-Verbindungen zwischen den Endpunkten 3, 4 gemäß dem erfindungsgemäßen Verfahren erfolgen. Dargestellt sind lediglich die für die Erfindung wesentlichen Meldungen. Andere Meldungen, insbesondere Pakete die Meldungen zu den Access-Routern 8, 9 enthalten, und sonstige dem Fachmann aus der regelmäßigen Praxis bekannten Meldungen eines H.323-Netzwerkes, sind aus Gründen der Übersichtlichkeit nicht dargestellt.

Zum Aufbau eines Rufes wird vom Ausgangs-Endpunkt (beispielsweise Endpunkt 3) eine H.225-SETUP-Meldung an die Registrierungseinheit 5 gesandt. Wenn diese den Ruf erkennt, übersendet sie zum einen die übliche H.225-CALL-PROCEEDING-Meldung an den Ausgangs-Endpunkt 3, sowie die übliche H.225-SETUP-Meldung an den Ziel-Endpunkt 4. Zusätzlich übersendet die Registrierungseinheit 5 eine H.225-RAS-IRQ-Meldung sowohl an den Ausgangs-Endpunkt 3 als auch an den Ziel-Endpunkt 4. Diese H.225-RAS Meldung enthält eine Umleitungsanweisung und eine Anweisung, die geforderte H.225-RAS-IRR-Meldung immer dann zu wiederholen, wenn die dem Ruf zugeordneten Media-Verbindungen auf- oder abgebaut werden, oder wenn sich deren Bandbreitenanforderung geändert hat, beispielsweise durch einen Wechsel der Media-Kodierung der Verbindung.

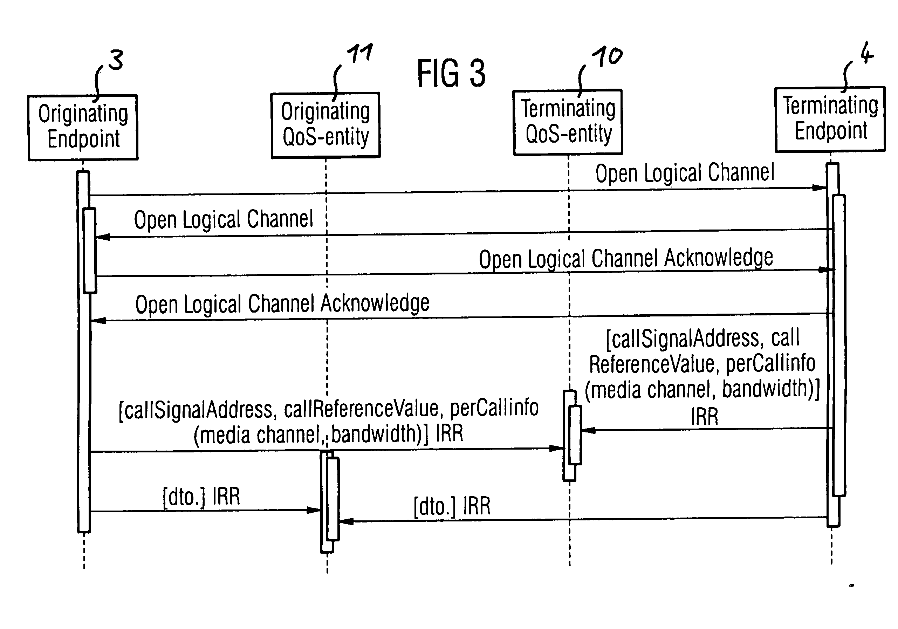

Die in der H.225-RAS-IRQ-Meldung enthaltene Umleitungsanweisung bestimmt bei der in der Fig. 3 dargestellten Alternative eine Übermittlung der jeweiligen H.225-RAS-IRR-Meldung der Endpunkte 3, 4 an die QoS-Einrichtungen 11, bzw. 10. Die QoS-Einrichtungen werden somit direkt über den Aufbau, die Auflösung oder über eine Änderung der Bandbreitenanforderungen der Media-Verbindung informiert.

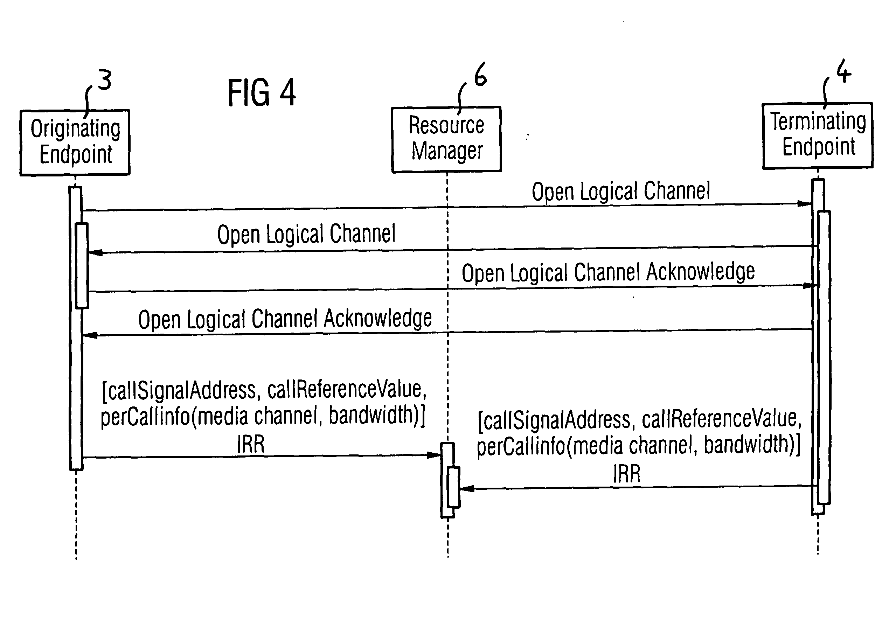

In der in Fig. 4 dargestellten Alternative bestimmt die Umleitungsanweisung der H.225-RAS-IRQ-Meldung eine Übermittlung der H.225-RAS-IRR-Meldung von den Endpunkten 3, 4 an den Ressourcen-Manager 6. Dieser leitet die Information an die QoS-Einrichtungen 10, 11 weiter. Falls gewünscht, kann die H.255-RAS-IRR-Meldung durch den Ressource Manager 6 mittels nicht dargestellter H.225-RAS-IACK oder -INACK Meldungen quittiert werden. Bei negativer Quittung kann die Bandbreite und die Dienstgüte für die Verbindung nicht garantiert werden.

In einer weiteren, nicht näher dargestellten Ausführungsform enthält die Rufstatusanforderungsmeldung keine Umleitungsadresse. In diesem Fall wird die Rufstatusquittungsmeldung von den Endpunkten an die Registrierungseinheit zurück übermittelt. Diese hat in der weiteren Ausführungsform eine Schnittstelle zu den QoS-Einrichtungen oder dem Ressourcen-Manager und leitet die Rufstatusquittungsmeldungen entweder direkt an die QoS-Einrichtungen bzw. den Ressourcen-Manager weiter oder die Information aus den Rufstatusquittungsmeldungen in jedwelchem Protokoll, welches auf diesen Schnittstellen definiert ist.

Die vorstehend näher beschriebenen Signalisierungsabfolgen einer Multimedianetzwerkstruktur ermöglichen es, die Identifikation der Media-Verbindungen zum Zwecke der Dienstgütesicherstellung und der Ressourcenverwaltung im Transportnetz zu vereinfachen.

### Bezugszeichenliste

- 1: Netzwerk
- 2: Netzwerk
- 3: Endpunkt
- 4: Endpunkt
- 5: Registrierungseinheit
- 6: Ressourcen Manager
- 7: WAN-Link
- 8: Access Router
- 9: Access Router
- 10: QoS-Einheit
- 11: QoS-Einheit

## Patentansprüche

1. Verfahren zum Betrieb eines Multimedia-Kommunikationsnetzwerkes mit mindestens zwei Endpunkten (3,4) und mindestens einer Registrierungseinheit (5), wobei
- von der Registrierungseinheit (5) nach Ankunft oder Autorisierung eines Rufes jeweils eine Rufstatusanforderungsmeldung an die jeweils am Ruf beteiligten Endpunkte (3,4) gesandt wird,
- die Rufstatusanforderungsmeldung eine Aufforderung an die Endpunkte (3,4) enthält, in einer Rufstatusquittungsmeldung einen Status, eine Transportadresse und eine zuzuweisende Bandbreite einer im Zusammenhang mit dem Ruf zwischen den Endpunkten (3,4) hergestellten Media- und/oder Datenverbindung zu berichten,
- die Rufstatusanforderungsmeldung eine Umleitungsanweisung für die Rufstatusquittungsmeldung enthält, und
- die Umleitungsanweisung eine Übermittlung der Rufstatusquittungsmeldung an einen Ressourcen-Manager (6) fordert.

2. Verfahren zum Betrieb eines Multimedia-Kommunikationsnetzwerkes mit mindestens zwei Endpunkten (3,4), zwischen denen durch einen Ruf Media- und/oder Datenverbindungen hergestellt werden, wobei
- von einem der Endpunkte nach Ankunft eines Rufes jeweils eine Rufstatusanforderungsmeldung an die jeweils am Ruf beteiligten Endpunkte (3,4) gesandt wird,
- die Rufstatusanforderungsmeldung eine Aufforderung an die Endpunkte (3,4) enthält, in einer Rufstatusquittungsmeldung einen Status, eine Transportadresse und eine zuzuweisende Bandbreite einer im Zusammenhang mit dem Ruf zwischen den Endpunkten (3,4) hergestellten Media- und/oder Datenverbindung zu berichten,
- die Rufstatusanforderungsmeldung eine Umleitungsanweisung für die Rufstatusquittungsmeldung enthält, und
- die Umleitungsanweisung eine Übermittlung der Rufstatusquittungsmeldung an eine QoS-Einrichtung (10,11) fordert.

3. Verfahren nach Anspruch 2,
**dadurch gekennzeichnet ,**
**daß** die Umleitungsanweisung eine IP-Multicast-Adresse enthält für die sich die QoS-Einrichtungen (10,11) registriert haben.

4. Verfahren nach Anspruch 2 oder 3,
**dadurch gekennzeichnet ,**
**daß** mindestens eine QoS-Einrichtung (10,11) die Rufstatusquittungsmeldung positiv oder negativ quittiert.

5. Verfahren nach Anspruch 1,
**dadurch gekennzeichnet ,**
**daß** mindestens ein Ressourcen-Manager (6) die Rufstatusquittungsmeldung positiv oder negativ quittiert.

6. Verfahren nach einem der voranstehenden Ansprüche,
**dadurch gekennzeichnet ,**
**daß** die Rufstatusanforderungsmeldung eine Aufforderung enthält, die geforderte Rufstatusquittungsmeldung zyklisch zu versenden.

7. Verfahren nach einem der voranstehenden Ansprüche,
**dadurch gekennzeichnet ,**
**daß** der Endpunkt (3,4) die Rufstatusquittungsmeldung nach Empfang der Rufstatusanforderungsmeldung immer wieder dann übermittelt, wenn eine Media- und/oder Datenverbindung ihre Eigenschaften geändert hat.

## Claims

1. Method for operating a multimedia communications network having at least two endpoints (3, 4) and at least one registration unit (5),
- after the arrival or authorization of a call, in each case a call status request message being transmitted by the registration unit (5) to the endpoints (3, 4) respectively involved in the call,
- the call status request message containing a request to the endpoints (3, 4) to report, in a call status acknowledge message, a status, a transport address and a bandwidth to be assigned for a media and/or data connection which is set up between the endpoints (3, 4) in connection with the call,
- the call status request message containing a divert instruction for the call status acknowledge message, and
- the divert instruction requesting the call status acknowledge message to be transferred to a resource manager (6).

2. Method for operating a multimedia communications network having at least two endpoints (3, 4) between which media and/or data connections are set up by means of a call,
- after the arrival of a call, in each case a call status request message being transmitted by one of the endpoints to the endpoints (3, 4) respectively involved in the call,
- the call status request message containing a request to the endpoints (3, 4) to report, in a call status acknowledge message, a status, a transport address and a bandwidth to be assigned of a media and/or data connection which is set up between the endpoints (3, 4) in connection with the call,
- the call status request message containing a divert instruction for the call status acknowledge message, and
- the divert instruction requesting the call status acknowledge message to be transferred to a QoS device (10, 11).

3. Method according to Claim 2, **characterized in that** the divert instruction contains an IP multicast address for which the QoS devices (10, 11) have been registered.

4. Method according to Claim 2 or 3, **characterized in that** at least one QoS device (10, 11) acknowledges the call status acknowledge message positively or negatively.

5. Method according to Claim 1, **characterized in that** at least one resource manager (6) acknowledges the call status acknowledge message positively or negatively.

6. Method according to one of the preceding claims, **characterized in that** the call status request message contains a request to dispatch the requested call status acknowledge message cyclically.

7. Method according to one of the preceding claims, **characterized in that**, after reception of the call status request message, the endpoint (3, 4) repeatedly transmits the call status acknowledge message if a media and/or data connection has changed its properties.

## Revendications

1. Procédé pour faire fonctionner un réseau de communications multimédia, comprenant au moins deux points terminaux (3, 4) et au moins une unité d'enregistrement (5),
- un message de demande d'état d'appel étant respectivement émis, après l'arrivée ou l'autorisation d'un appel, par l'unité d'enregistrement (5) aux points terminaux (3, 4) participant respectivement à l'appel,
- le message de demande d'état d'appel contenant une invitation pour les points terminaux (3, 4) d'informer, dans un message d'accusé de réception d'un état d'appel, d'un état, d'une adresse de transport et d'une largeur de bande à affecter d'une liaison média et/ou d'une liaison de données établie entre les points terminaux (3, 4) en relation avec l'appel,
- le message de demande d'état d'appel contenant une instruction de renvoi pour le message d'accusé de réception de l'état d'appel, et
- l'instruction de renvoi demandant une transmission du message d'accusé de réception de l'état d'appel à un gestionnaire de ressources (6).

2. Procédé pour faire fonctionner un réseau de communications multimédia, comprenant au moins deux points terminaux (3, 4) entre lesquels des liaisons média et/ou des liaisons de données sont établies par un appel,
- un message de demande d'état d'appel étant respectivement émis, après l'arrivée d'un appel, par l'un des points terminaux aux points terminaux (3, 4) participant respectivement à l'appel,
- le message de demande d'état d'appel contenant une invitation pour les points terminaux (3, 4) d'informer, dans un message d'accusé de réception d'un état d'appel, d'un état, d'une adresse de transport et d'une largeur de bande à affecter d'une liaison média et/ou d'une liaison de données établie entre les points terminaux (3, 4) en relation avec l'appel,
- le message de demande d'état d'appel contenant une instruction de renvoi pour le message d'accusé de réception de l'état d'appel, et
- l'instruction de renvoi demandant une transmission du message d'accusé de réception de l'état d'appel à un dispositif QoS (10, 11).

3. Procédé selon la revendication 2,
**caractérisé en ce**
**que** l'instruction de renvoi contient une adresse IP Multicast pour laquelle les dispositifs QoS (10, 11) se sont enregistrés.

4. Procédé selon la revendication 2 ou 3,
**caractérisé en ce**
**qu'**au moins un dispositif QoS (10, 11) accuse réception, de manière positive ou négative, du message d'accusé de réception de l'état d'appel.

5. Procédé selon la revendication 1,
**caractérisé en ce**
**qu'**au moins un gestionnaire de ressources (6) accuse réception, de manière positive ou négative, du message d'accusé de réception de l'état d'appel.

6. Procédé selon l'une quelconque des revendications précédentes,
**caractérisé en ce**
**que** le message de demande d'état d'appel contient une invitation à émettre cycliquement le message d'accusé de réception de l'état d'appel.

7. Procédé selon l'une quelconque des revendications précédentes,
**caractérisé en ce**
**que** le point terminal (3, 4), après la réception du message de demande d'état d'appel, transmet le message d'accusé de réception de l'état d'appel à chaque fois qu'une liaison média et/ou une liaison de données a modifié ses propriétés.
